Europäisches Patentamt

European Patent Office

Office européen des brevets

(11) Veröffentlichungsnummer: **0 580 628 B1**

(12) **EUROPÄISCHE PATENTSCHRIFT**

(45) Veröffentlichungstag der Patentschrift: **19.07.95**

(21) Anmeldenummer: **92907356.7**

(22) Anmeldetag: **07.04.92**

(86) Internationale Anmeldenummer:
**PCT/DE92/00273**

(87) Internationale Veröffentlichungsnummer:
**WO 92/18291 (29.10.92 92/27)**

(51) Int. Cl.⁶: **B25F 5/00**

(54) HANDWERKZEUGMASCHINE MIT BLOCKIERSENSOR.

(30) Priorität: **12.04.91 DE 4112012**

(43) Veröffentlichungstag der Anmeldung:
**02.02.94 Patentblatt 94/05**

(45) Bekanntmachung des Hinweises auf die
Patenterteilung:
**19.07.95 Patentblatt 95/29**

(84) Benannte Vertragsstaaten:
**CH DE GB IT LI**

(56) Entgegenhaltungen:
**EP-A- 0 150 669**
**EP-A- 0 182 986**
**EP-A- 0 199 883**
**EP-A- 0 239 670**

(73) Patentinhaber: **ROBERT BOSCH GMBH**
**Postfach 30 02 20**
**D-70442 Stuttgart (DE)**

(72) Erfinder: **HETTICH, Volker**
**Hutwiesenweg 8**
**D-7022 Leinfelden-Echterdingen (DE)**

**Beschreibung**

Die Erfindung geht aus von einer Handwerkzeugmaschine nach dem Oberbegriff des Anspruchs 1. Aus der EP 199 883 A2 ist bereits eine Handwerkzeugmaschine bekannt, die zum Erkennen eines plötzlich auftretenden Klemmens oder Blockierens des Werkzeugs einen separaten Lagerbock und daran angeordnete elektrische Kraftmeßelemente aufweist. Diese Konstruktion erfordert einen speziell ausgestalteten und an einer Schwenkachse drehbar im Maschinengehäuse gehaltenen Lagerbock. Da die durch die Drehmomentübertragung auftretenden Reaktionskräfte gemessen werden, besteht bei auch im Nornalbetrieb auftretenden Momentenstößen die Gefahr einer Fehlauslösung.

Vorteile der Erfindung

Die erfindungsgemäße Handwerkzeugmaschine mit den Merkmalen des Anspruchs 1 hat demgegenüber den Vorteil, daß das Blockieren eines Werkzeugs ohne zusätzlichen baulichen Aufwand zuverlässig und auf einfache Weise erfaßt werden kann. Dazu bedient sich die Erfindung des Effektes, daß bei einem an mindestens einem Punkt aufgehängten sich drehenden Körper eine erzwungene Lageveränderung einen zusätzlichen, rechtwinklig zu der Auslenkung gerichteten Drehimpuls hervorruft. Dieser Kreiseleffekt erzeugt Auflagerkräfte in den Lagern des rotierenden Teils, die im Normalbetrieb nicht auftreten.

Durch die in den abhängigen Ansprüchen aufgeführten Maßnahmen sind vorteilhafte Weiterbildungen und Verbesserungen der im Anspruch 1 angegebenen Handwerkzeugmaschine möglich. Besonders vorteilhaft ist es, den oder die Sensoren auf einer parallel zur Drehachse des Werkzeugs und durch die Mittelachse des rotierenden Teils, insbesondere des Motors verlaufenden Linie anzuordnen. Der Sensor kann als Kraftmeßelement oder als Drucksensor ausgebildet sein. Besonders vorteilhaft ist es auch, wenn der rotierende Teil von dem Anker des Motors gebildet wird. Dies führt wegen des großen Massenträgheitsmoments des Ankers zu einem entsprechend großen zusätzlichen Drehimpuls. Besonders gut kann der zusätzliche Drehimpuls detektiert werden, wenn die im normalen Betrieb auftretenden Lagerkräfte in anderer Richtung, insbesondere um 90° versetzt zu den Kreiselkräften wirken. Dies kann damit erreicht werden, daß die mit dem rotierenden Teil zusammenwirkenden Getriebeglieder so angeordnet sind, daß die Übertragungskräfte nicht in Richtung der Drehachse des Werkzeugs, sondern rechtwinklig dazu wirken. Mit dem Meßsignal des Sensors wird eine Sternereinrichtung gespeist, die eine Unterbrechung des Drehantriebs des Werkzeugs, insbesondere durch Abschalten des Motors oder durch Öffnen einer Sicherheitskupplung bewirkt.

Zeichnung

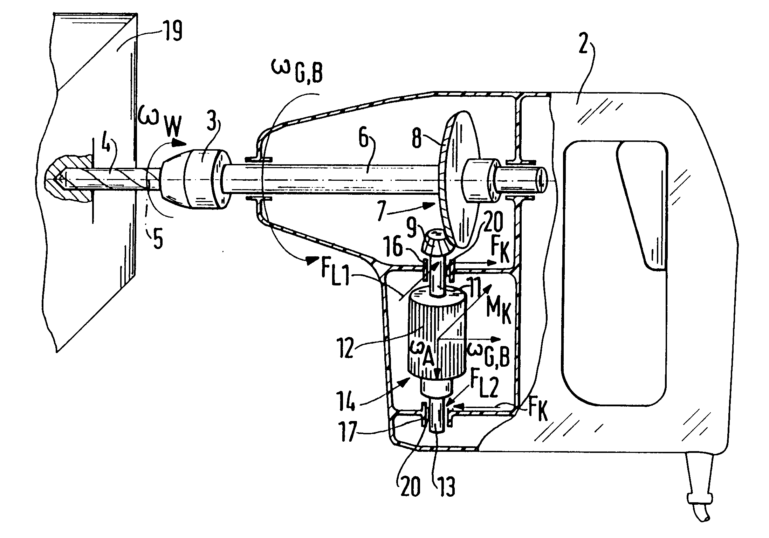

Ein Ausführungsbeispiel der Erfindung ist in der Zeichnung dargestellt und in der nachfolgenden Beschreibung näher erläutert. Figur 1 zeigt einen Schnitt durch einen Bohrhammer.

Beschreibung des Ausführungsbeispiels

In Figur 1 ist schematisch ein Bohrhammer 1 mit einem Gehäuse 2 und mit einer aus dem Gehäuse herausragenden Werkzeugaufnahme 3, in die ein Bohrwerkzeug 4 eingesetzt ist. Ein im Gehäuse 2 untergebrachtes Schlagwerk ist in der Zeichnung nicht gezeigt. Das Bohrwerkzeug 4 wird um seine Drehachse 5 rotierend von einer die Werkzeugaufnahme 3 tragenden Spindel 6 angetrieben. Die Spindel 6 steht ihrerseits über zwei ein Getriebe 7 bildende Kegelräder 8, 9 in Verbindung mit einer Welle 11 eines elektrischen Motors 12. Von diesem ist in der Zeichnung nur der um seine Mittelachse 13 rotierende Teil 14, also der Anker gezeigt. Die Mittelachse 13 steht senkrecht zur Drehachse 5 des Werkzeugs 4. Die Welle 11 ist in zwei gehäusefesten Lagerstellen 16, 17, die zum Beispiel als Wälzlager ausgebildet sein können, gelagert. Die Motorwelle 11 und die Spindel 6 sind so zueinander angeordnet, daß die Lagerkräfte in den Lagerstellen 16, 17 in einer zur Spindel 6 senkrecht stehenden Ebene, also in einer parallel zum Kegelrad 8 stehenden Ebene wirken. Bei rechtsherum angetriebenem Werkzeug 4 tritt also in der Lagerstelle 16 die Betriebslagerkraft $F_{L1}$ und in der Lagerstelle 17 die Betriebslagerkraft $F_{L2}$ auf.

Beim Eindringen des Bohrwerkzeugs 4 in das Werkstück 19 kann es zum Blockieren des Bohrers kommen. Dies bedeutet, daß die Winkelgeschwindigkeit $\omega_W$ des Bohrwerkzeugs 4 schlagartig zu Null wird. Der weiterlaufende Motor 12 bewirkt nun, daß sich das Gehäuse 2 gemäß dem mit $\omega_{G,B}$ bezeichneten Pfeil um die Drehachse 5 nach links dreht. Damit wird der als Kreisel zu betrachtende rotierende Teil 14 des Motors 12 ebenfalls aus seiner Ruhelage um die Achse 4 nach links drehend ausgelenkt. Dadurch wird wie bei einem aus seiner Ruhelage ausgelenkten Kreisel eine Änderung des Drallrektors bzw. Drehimpulsrektors erzeugt.

Durch die erzwungene Änderung des Drallrektors entsteht das Moment der Kreiselwirkung $M_K$:

$$\vec{M_K} = \frac{dD}{dt} = \vec{\omega}_{G,B} \times \vec{D}$$

beziehungsweise

$$M_K = \omega_{G,B} \times \omega_A \times I_A$$

mit:

$\omega_{G,B}$    Winkelgeschwindigkeit des Gehäuses im Blockierfall

$\omega_A$    Winkelgeschwindigkeit des Ankers

$I_A$    Massenträgheitsmoment des Ankers

Das Moment der Kreiselwirkung $M_K$ erzeugt in den Lagerstellen 16 und 17 zusätzliche Auflagerkräfte $F_K$, die um 90° verdreht gegenüber den Betriebslagerkräften $F_L$ wirken. Im Wirkungsbereich der Auflagerkräfte $F_K$ ist mindestens an einer der Lagerstellen 16, 17 ein Sensor 20 zur Messung dieser Kräfte angebracht. Die Sensoren können Kraftmeßelemente oder Kraft- oder Drucksensoren sein, die insbesondere zwischen dem Gehäuse 2 und den Lagern 16, 17 angeordnet sein können.

Das Meßsignal des oder der Sensoren 20 wird an eine nicht gezeigte Steuereinrichtung abgegeben, die die Höhe des Meßsignals und/oder gegebenenfalls dessen Verlauf aufnimmt und beim Erkennen eines blockierten Werkzeugs eine Unterbrechung des Drehantriebs des Werkzeugs 4 bewirkt. Dies kann entweder dadurch geschehen, daß der Motor 12 abgeschaltet wird oder eine ebenfalls nicht gezeigte, aber aus dem Stand der Technik bekannte Sicherheitskupplung im Antriebsstrang zwischen dem Motor 12 und der Werkzeugaufnahme 3 ausgelöst wird. Diese Sicherheitskupplung trennt den Motor 12 rechtzeitig vom Werkzeug 4, womit ebenfalls eine zu weite Drehung des Gehäuses 2 im Blockierfall unterbunden wird.

Das in der beschriebenen Weise gewonnene Meßsignal zeigt eindeutig einen Blockierfall an, da im Normalbetrieb in der Richtung $F_K$ quer zu den Betriebslagerkräften $F_L$ keine Momentenstöße auftreten. Fehlauslösungen werden damit vermieden. Die Ausnutzung des Kreiseleffekts hat weiter den Vorteil, daß dessen Größe von der Verdrehgeschwindigkeit des Gehäuses abhängt und sich damit automatisch dem Verhalten der Bedienungsperson anpaßt. Wenn diese das Gehäuse 2 so festhält, daß keine Verdrehung auftritt, wird auch das Werkzeug nicht vom Motor getrennt. Es kann dann die volle Kraft der Maschine für Drehbohrarbeiten ausgenutzt werden.

**Patentansprüche**

1. Handwerkzeugmaschine, insbesondere Bohrhammer, mit einem Gehäuse (2) und mit einem Werkzeug (4), das drehend angetrieben ist von einem im Gehäuse (2) angeordneten Motor (12) mit Getriebe (7), wovon mindestens ein rotierender Teil (14) nicht achsparallel zu der Drehachse (5) des Werkzeugs (4) liegt und an zwei gehäusefesten Lagerstellen (16, 17) gelagert ist, wobei an mindestens einer der Lagerstellen (16,17) ein Kraft- oder Druck-Sensor (20) angeordnet ist, dadurch gekennzeichnet, daß der Sensor (20) so angeordnet ist, daß er im wesentlichen in Wirkrichtung der, bei um die Drehachse (5) des Werkzeugs (4) sich drehendem Gehäuse (2), von dem Moment $M_K$ der dabei auftretenden Kreiselwirkung des rotierenden Teils (14) hervorgerufenen Auflagerkräfte $F_K$ liegt.

2. Handwerkzeugmaschine nach Anspruch 1, dadurch gekennzeichnet, daß der rotierende Teil (14) etwa rechtwinklig zur Drehachse des Werkzeugs (4) angeordnet ist.

3. Handwerkzeugmaschine nach Anspruch 2, dadurch gekennzeichnet, daß der Sensor (20) auf einer parallel zur Drehachse (5) des Werkzeugs (4) und durch die Mittelachse des rotierenden Teils (14) verlaufenden Geraden angeordnet ist.

4. Handwerkzeugmaschine nach Anspruch 1, 2 oder 3, dadurch gekennzeichnet, daß der rotierende Teil (14) der Anker des Motors (12) ist.

5. Handwerkzeugmaschine nach einem der vorhergehenden Ansprüche, dadurch gekennzeichnet, daß vom Kreiseleffekt hervorgerufenen Lagerkräfte $F_K$ in anderer Richtung wie die im normalen Betrieb auftretenden Lagerkräfte $F_L$, insbesondere quer dazu wirken.

6. Handwerkzeugmaschine nach einem der vorhergehenden Ansprüche, dadurch gekennzeichnet, daß die mit dem rotierenden Teil (14) zusammenwirkenden Getriebeglieder (8, 9) so angeordnet sind, daß die im Normalbetrieb auftretenden Übertragungskräfte in dem Getriebe (7) etwa rechtwinklig zur Drehachse (5) des Werkzeugs (4) wirken.

7. Handwerkzeugmaschine nach einem der vorhergehenden Ansprüche, dadurch gekennzeichnet, daß der Sensor (20) ein Meßsignal abgibt an eine Steuereinrichtung, die eine Unterbrechung des Drehantriebs des Werkzeugs (4) bewirkt.

8. Handwerkzeugmaschine nach Anspruch 7, dadurch gekennzeichnet, daß die Steuereinrichtung ein Abschalten des Motors (12) oder die Öffnung einer Sicherheitskupplung bewirkt.

## Claims

1.  Hand-held power tool, particularly a hammer drill, comprising a casing (2) and a tool attachment (4) driven to rotate by a motor (12) which is arranged in the casing (2) and has a gear unit (7) and of which at least a rotating part (14) is not axially parallel to the axis of rotation (5) of the tool attachment (4) and is mounted in two bearings (16, 17) fixed to the casing, a force or pressure sensor (20) being arranged at at least one of the bearings (16, 17), characterized in that the sensor (20) is arranged in such a manner that it lies substantially in the direction of action of the bearing forces $F_K$ produced by the moment $M_K$ of the gyro action of the rotating part (14) occurring during the rotation of the casing (2) about the axis of rotation (5) of the tool attachment (4).

2.  Hand-held power tool according to Claim 1, characterized in that the rotating part (14) is arranged approximately at right angles to the axis of rotation of the tool attachment (4).

3.  Hand-held power tool according to Claim 2, characterized in that the sensor (20) is arranged on a straight line extending parallel to the axis of rotation (5) of the tool attachment (4) and through the centre line of the rotating part (14).

4.  Hand-held power tool according to Claim 1, 2 or 3, characterized in that the rotating part (14) is the armature of the motor (12).

5.  Hand-held power tool according to one of the preceding claims, characterized in that bearing forces $F_K$ produced by the gyro effect act in a direction different from, and in particular transversely to, that of the bearing forces $F_L$ occurring in normal operation.

6.  Hand-held power tool according to one of the preceding claims, characterized in that the gear elements (8, 9) cooperating with the rotating part (14) are arranged in such a manner that the transmission forces occurring in normal operation act in the gear unit (7) approximately at right angles to the axis of rotation (5) of the tool attachment (4).

7.  Hand-held power tool according to one of the preceding claims, characterized in that the sensor (20) outputs a measurement signal to a control unit, which cuts off the rotational drive of the tool attachment (4).

8.  Hand-held power tool according to Claim 7, characterized in that the control unit switches off the motor (12) or opens a safety coupling.

## Revendications

1.  Machine-outil à main, notamment perceuse à percussions ou perforateur, comprenant un boîtier (2) et un outil (4) entraîné en rotation par un moteur (12) logé dans le boîtier (2) avec une transmission (7), dont au moins une partie rotative (14) n'est pas parallèle à l'axe de rotation (5) de l'outil (4) et est monté dans deux points de palier (16, 17) solidaires du boîtier, et au moins l'un des points de palier (16, 17) comporte un capteur de force ou de pression (20), caractérisé en ce que le capteur (20) est monté pour se situer principalement dans la direction d'action des forces d'appui ($F_K$) engendrées à la rotation du boîtier (2) autour de l'axe de rotation (5) de l'outil (4), par le couple de l'effet gyroscopique de la partie rotative (14) engendré par le couple ($M_K$).

2.  Machine-outil à main selon la revendication 1, caractérisée en ce que la partie rotative (14) est sensiblement perpendiculaire à l'axe de rotation de l'outil (4).

3.  Machine-outil à main selon la revendication 2, caractérisée en ce que le capteur (20) est monté sur une droite parallèle à l'axe de rotation (5) de l'outil (4) et passant par l'axe géométrique de la partie rotative (14).

4.  Machine-outil à main selon la revendication 1, 2 ou 3, caractérisée en ce que la partie rotative (14) est l'induit du moteur (12).

5.  Machine-outil à main selon l'une des revendications précédentes, caractérisée en ce que les forces d'appui ($F_K$) engendrées par l'effet gyroscopique agissent dans une direction différente de celle des forces d'appui ($F_L$) engendrées par le fonctionnement normal, en particulier transversalement à cette direction.

6.  Machine-outil à main selon l'une des revendications précédentes, caractérisée en ce que les éléments de transmission (8, 9) coopérant avec la partie rotative (14) sont disposés pour que les forces de transmission engendrées par le fonctionnement normal dans la transmission (7) agissent sensiblement perpendiculairement à l'axe de rotation (5) de l'outil (4).

7. Machine-outil à main selon l'une des revendications précédentes, caractérisée en ce que le capteur (20) émet un signal de mesure à une installation de commande qui coupe l'entraînement en rotation de l'outil (4).

8. Machine-outil à main selon la revendication 7, caractérisée en ce que l'installation de commande assure la coupure du moteur (12) ou l'ouverture d'un embrayage de sécurité.